# EUROPEAN PATENT APPLICATION

(11) **EP 4 799 982 A1**
(43) Date of publication of application: **02.09.2026**
(21) Application number: 25160700.8
(22) Date of filing: 27.02.2025
(51) Int. Cl.: C02F 1/28, C02F 1/42, H01M 8/0662

(54) **A FILTRATION SYSTEM FOR FILTERING FLUIDS AND A FILTRATION CARTRIDGE**

(71) Applicant: MANN+HUMMEL GmbH, 71636 Ludwigsburg (DE)
(72) Inventor: LEININGER, Simon, 71636 Ludwigsburg (DE)
(74) Representative: Mann + Hummel Intellectual Property

(57) **Abstract**

A filtration system (100) for filtering fluids, in particular for filtering exhaust fluids of a fuel cell system, comprises a water separator (10) for separating water from a fluid flow, the water separator (10) comprising an inlet port (12) for the fluid flow having a first water content entering the water separator (10), an outlet port (14) for the fluid flow having a second water content leaving the water separator (10), and a water drain port (16) for the water separated from the fluid flow, the first water content being higher than the second water content, and a first filter module (20) and a second filter module (30), each of the first and second filter modules (20, 30) comprising a first adsorbent material (42) and/or a second adsorbent material (52). An inlet port (24) of the first filter module (20) is connected to the outlet port (14) of the water separator (10), an inlet port (34) of the second filter module (30) is connected to the water drain port (16) of the water separator (10), the first filter module (20) comprises an outlet port (26) for a filtered fluid, the second filter module (30) comprises an outlet port (36) for filtered water, and the first and second adsorbent materials (42, 52) are for removing at least perfluoroalkyl and polyfluoroalkyl substances from the fluid flow and/or the water.

## Description

### Technical Field

Embodiments relate to a filtration system for filtering fluids, in particular for filtering exhaust fluids of a fuel cell system, as well as to a filtration cartridge for a filtration system for filtering fluids, in particular for filtering exhaust fluids of a fuel cell system.

### Background Art

Proton Exchange Membranes (PEM) used in fuel cell systems (fuel cell stack and humidifier) for mobile applications are currently fluorinated and contain Perfluorinated and polyfluorinated (PFAS) chemicals. They provide good ion conductivity, electrical resistance, and membrane thickness. However, under normal operating conditions, the membrane undergoes degradation mechanisms which lead to fluorinated fragments (PFASs) emission in the effluent exhaust fluid of the fuel cell.

Strong restrictions regarding PFAS use and emissions are expected in the upcoming years. Currently, no mature PFAS free membranes are available.

US 2021/0179449 A1 discloses a method of treating water containing per- and polyfluoroalkyl substances (PFASs). The method comprises providing an activated carbon bed comprising activated carbon loaded with a positively-charged surfactant, and introducing the water to the activated carbon bed to promote adsorption of the PFASs.

US 2022/0250948 A1 discloses a system for removing long-chain and short-chain per- and polyfluoroalkyl substances (PFAS) from contaminated water using a regenerable anion exchange resin. The system includes a first anion exchange resin vessel configured to receive a flow of water contaminated with long and short-chain PFAS compounds. The first anion exchange resin vessel includes a first regenerable anion exchange resin to remove a majority of the long-chain PFAS compounds from the contaminated water. The system also includes a second anion exchange resin vessel configured to receive the flow of water having a majority of the long-chain PFAS compounds removed. The second anion exchange resin vessel includes a second regenerable anion exchange resin to remove a majority of the short-chain PFAS compounds from the contaminated water.

### Summary

An object of the embodiments is to provide an improved filtration system for filtering fluids, in particular for filtering exhaust fluids of a fuel cell system.

A further object of the embodiments is to provide a filtration cartridge for a filtration system for filtering fluids, in particular for filtering exhaust fluids of a fuel cell system.

According to an aspect of the embodiments the object is achieved by a filtration system for filtering fluids, in particular for filtering exhaust fluids of a fuel cell system, the filtration system comprising a water separator for separating water from a fluid flow, the water separator comprising an inlet port for the fluid flow having a first water content entering the water separator, an outlet port for the fluid flow having a second water content leaving the water separator and a water drain port for the water separated from the fluid flow, the first water content being higher than the second water content, and a first filter module and a second filter, each of the first and second filter modules comprising a first adsorbent material and/or a second adsorbent material. An inlet port of the first filter module is connected to the outlet port of the water separator, an inlet port of the second filter module is connected to the water drain port of the water separator, the first filter module comprises an outlet port for a filtered fluid, the second filter module comprises an outlet port for filtered water, and the first and second adsorbent materials are for removing at least perfluoroalkyl and polyfluoroalkyl substances from the fluid flow and/or the water.

According to a further aspect of the embodiments the further object is achieved by a filtration cartridge for a filtration system for filtering fluids, in particular for filtering exhaust fluids of a fuel cell system, the filtration cartridge comprising a cartridge container comprising a first adsorbent material and/or a second adsorbent material for removing at least perfluoroalkyl and polyfluoroalkyl substances from the fluids. The cartridge container further comprises at least one inflow opening and at least one outflow opening, the first and/or second adsorbent materials being arranged inside the cartridge container between the at least one inflow opening and the at least one outflow opening.

Advantageous embodiments are described in the dependent claims, the description and the drawings.

The proposed filtration system comprises a water separator and two filter modules, with at least a first and/or at least a second adsorbent material, e.g. an ion exchange resin, activated carbon, or a mixture of both. The water separator efficiently separates the liquid and vapor phases of PFAS emissions in fuel cell systems, enabling targeted treatment.

The filter modules are configured to accommodate at least a first and/or at least a second adsorbent material such as either ion exchange resin, activated carbon, or a combination, based on specific treatment needs. The ion exchange resin is particularly effective for capturing both short- and long-chain PFAS, making it highly suitable for comprehensive treatment. In contrast, activated carbon is less efficient for treating short chain PFAS. These adsorbent materials, in granulate form, are housed within the filter module stages, through which the liquid and vapor pass.

Advantageously, the filter modules may be filled with the chosen granulates, ensuring optimal flow rate and retention time. The filtration system may be integrated into the exhaust system of fuel cells, capturing and treating PFAS emissions before they are released into the environment. Due to the dual-phase treatment approach PFAS emissions may be more effectively reduced compared to state of the art, which focuses solely on the liquid phase.

The exhaust fluid of a fuel cell system consists of three phases, air, water vapor and liquid water. It is expected that the PFAS is mainly accumulated in the liquid phase. The ion exchange resin used as an adsorbent material is a strong base anion exchange resin with functional group tributylamine in the chloride form. Potentially also activated carbon or a combination of both ion exchange resins and activated carbon may be used. Both adsorbent materials may be granulates, which can be filled into a cartridge, where the exhaust fluid is passing through. The filtration cartridge itself can be enclosed in an openable housing for easy service. So only the filtration cartridge needs to be replaced but not the complete assembly. A water separator can be used to separate the liquid and the gas phase to treat both phases separately in previously described filtration cartridges.

Advantageously, liquid and vapor phases of PFAS emissions, which can exist in both phases in exhaust fluids of fuel cell systems under certain conditions, may be treated.

The dual-phase PFAS filtration system has significant applications in the field of fuel cell technology, particularly for mobile applications, but also for stationary applications. It addresses the critical issue of PFAS emissions from Proton Exchange Membranes (PEM) in fuel cell systems. Efficiently separating and treating both liquid and vapor phases of PFAS emissions is highly relevant for environmental protection and regulatory compliance in the automotive and energy sectors.

The water separator and dual filter modules, utilizing ion exchange resin and activated carbon, offer a comprehensive solution for capturing both short- and long-chain PFAS. This makes it suitable for integration into fuel cell exhaust systems, ensuring reduced environmental impact. Additionally, the proposed filtration system can be applied in industrial applications where PFAS emissions are a concern, such as chemical manufacturing and waste management.

According to a favorable embodiment of the filtration system, the first and second filter modules respectively may comprise filtration cartridges arranged inside the first and second filter modules such that the inlet ports of the first and second filter modules are separated from the outlet ports of the first and second filter modules by the filtration cartridges. Thus, a fluid flow from the inlet port to the outlet port of the filter modules is forced to stream through the filtration cartridge.

According to a favorable embodiment of the filtration system, the first and second filter modules may respectively comprise housings, in which the filtration cartridges are respectively arranged, each of the housings comprising a first housing part and a second housing part. The filtration cartridge, filled with the adsorbent material, may be replaced when the adsorbent material is saturated.

According to a favorable embodiment of the filtration system, each of the first and second adsorbent materials may be any one or any combination of an ion exchanger resin, an activated carbon, and a mixture of an ion exchanger resin and an activated carbon. Advantageously, PFAS removal from the fluid may be facilitated.

According to a favorable embodiment of the filtration system, the filtration cartridges may be replaceable. The filtration cartridge, filled with the adsorbent material, may be replaced when the adsorbent material is saturated.

The proposed filtration cartridge is configured to accommodate at least a first and/or at least a second adsorbent material such as either ion exchange resin, activated carbon, or a combination, based on specific treatment needs. The ion exchange resin is particularly effective for capturing both short- and long-chain PFAS, making it highly suitable for comprehensive treatment. In contrast, activated carbon is less efficient for treating short chain PFAS. These adsorbent materials, in granulate form, are housed within the filter module stages, through which the liquid and vapor pass.

Advantageously, the filtration cartridge may be filled with the chosen granulates, ensuring optimal flow rate and retention time.

The exhaust fluid of a fuel cell system consists of three phases, air, water vapor and liquid water. It is expected that the PFAS is mainly accumulated in the liquid phase. The ion exchange resin used as an adsorbent material is a strong base anion exchange resin with functional group tributylamine in the chloride form. Potentially also activated carbon or a combination of both ion exchange resins and activated carbon may be used. Both adsorbent materials may be granulates, which can be filled into a cartridge, where the exhaust fluid is passing through. The filtration cartridge itself can be enclosed in an openable housing for easy service. So only the filtration cartridge needs to be replaced but not the complete assembly.

Thus, the adsorbent material, e.g. an ion exchanger resin and/or activated carbon, may easily be handled.

According to a favorable embodiment of the filtration cartridge, the cartridge container may further comprise at least one fluid permeable interface enclosing the first and/or second adsorbent materials, the least one fluid permeable interface being a sieve or a fluid permeable membrane. Thus, the fluid to be filtered may easily enter the filtration cartridge to react with the adsorbent material inside the filtration cartridge and leave the filtration cartridge through the outflow opening. Advantageously, PFAS removal from the exhaust fluid may be facilitated.

According to a favorable embodiment of the filtration cartridge, one of the first and/or second adsorbent materials may be arranged in the cartridge container upstream of another of the first and/or second adsorbent materials. The first and the second adsorbent material may be selectively filtering the fluid according to the material's specification. So, long-chain PFASs and short-chain PFASs may efficiently be removed from the exhaust fluid.

According to a favorable embodiment of the filtration cartridge, each of the first and second adsorbent materials may be any one or any combination of an ion exchanger resin, an activated carbon, and a mixture of an ion exchanger resin and an activated carbon. Advantageously, PFAS removal from the fluid may be facilitated.

According to a favorable embodiment of the filtration cartridge, the filtration cartridge may be replaceable. The filtration cartridge, filled with the adsorbent material, may be replaced when the adsorbent material is saturated.

### Brief Description of Drawings

The embodiments together with the above-mentioned and other objects and advantages may best be understood from the following detailed description of the embodiments, but not restricted to the embodiments.
Figure 1 is a system layout of a filtration system for filtering fluids, in particular for filtering exhaust fluids of a fuel cell system, according to embodiments.
Figure 2 shows a filter module of the filtration system according to Figure 1.
Figure 3 shows a filtration cartridge for a filtration system for filtering fluids, in particular for filtering exhaust fluids of a fuel cell system, according to the embodiments.
Figure 4 shows a filtration cartridge according to further embodiments.
Figure 5 shows a water separator of the filtration system according to Figure 1.

### Description of Embodiments

In the drawings, like elements are referred to with equal reference numerals. The drawings are merely schematic representations, not intended to portray specific parameters of the embodiments. Moreover, the drawings are intended to depict only typical embodiments of the embodiments and therefore should not be considered as limiting the scope of the embodiments.

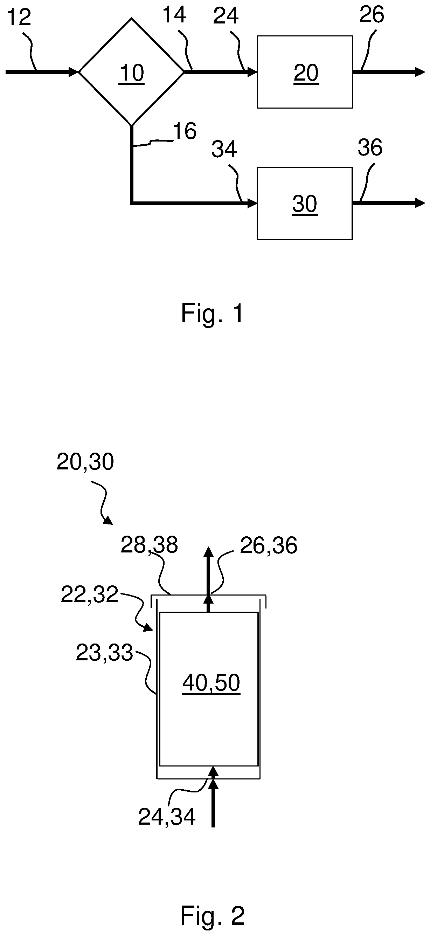

Figure 1 depicts a system layout of a filtration system 100 for filtering fluids, in particular for filtering exhaust fluids of a fuel cell system, according to embodiments.

The filtration system 100 comprises a water separator 10 for separating water from a fluid flow. The water separator 10 comprises an inlet port 12 for the fluid flow having a first water content entering the water separator 10, an outlet port 14 for the fluid flow having a second water content leaving the water separator 10 and a water drain port 16 for water separated from the fluid flow. Hereby, the first water content is higher than the second water content.

The filtration system 100 further comprises a first filter module 20 and a second filter module 30. Both filter modules 20, 30 each comprise at least one filtration cartridge 40, 50 (as is to be seen from Figure 2) with at least one first and/or at least one second adsorbent material 42, 52. The first and second adsorbent materials 42, 52 are configured to remove at least perfluoroalkyl and polyfluoroalkyl substances from the fluids and the water. For this purpose, the first and second adsorbent material 42, 52 may be an ion exchanger resin or an activated carbon or a mixture of an ion exchanger resin and an activated carbon.

An inlet port 24 of the first filter module 20 is connected to the outlet port 14 of the water separator 10 and an inlet port 34 of the second filter module 30 is connected to the water drain port 16 of the water separator 10.

The first filter module 20 comprises an outlet port 26 for the filtered fluid, such as a gas or vapor. The second filter module 30 comprises an outlet port 36 for the filtered water.

Figure 2 depicts a filter module 20, 30 of the filtration system 100.

The filter module 20, 30 is provided with a housing 22, 32. A filtration cartridge 40, 50 is arranged inside the housing 22, 32. The housing 22, 32 comprises a first housing part 23, 33 as a container and a second housing part 28, 38 as a cover for closing the first housing part 23, 33. The filtration cartridges 40 is arranged replaceable inside the housing 22, 32.

The filtration cartridge 40, 50 is arranged inside the filter module 20, 30 such that the inlet ports 24, 34 of the filter module 20, 30 are separated from the outlet ports 26, 36 by the filtration cartridge 40, 50.

In alternative, not depicted embodiments there may be more than one filtration cartridges 40, 50 be arranged inside the housing 22, 32. The filtration cartridges 40, 50 may be arranged in a serial flow arrangement one filtration cartridge 40, 50 upstream of the other. Alternatively, the filtration cartridges 40, 50 may be arranged in a parallel flow arrangement.

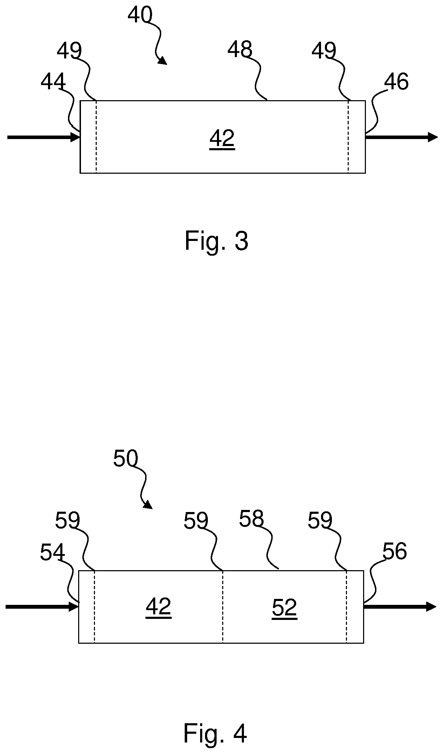

In Figure 3 a filtration cartridge 40 according to the embodiments is depicted.

The filtration cartridge 40 comprises a cartridge container 48 with a first adsorbent material 42 for removing at least perfluoroalkyl and polyfluoroalkyl substances from the fluid.

The cartridge container 48 is equipped with an inflow opening 44 and an outflow opening 46. The first adsorbent material 42 is arranged inside the cartridge container 48 between the inflow opening 44, 54 and the outflow opening 46.

In the embodiment depicted in Figure 3, the first adsorbent material 42 is enclosed inside the cartridge container 48 by two fluid permeable interfaces 49, one at each end. The fluid permeable interfaces 49, 59 e.g. may be configured as a sieve or a fluid permeable membrane.

The first adsorbent material 42 may be an ion exchanger resin or an activated carbon or a mixture of an ion exchanger resin and an activated carbon.

Figure 4 depicts a filtration cartridge 50 according to further embodiments.

The replaceable filtration cartridge 50 comprises a first and a second adsorbent material 42, 52. The first adsorbent materials 42 is arranged in the cartridge container 58 upstream of the second adsorbent material 52. The first and the second adsorbent materials 42, 52 are enclosed and separated from each other by fluid permeable interfaces 59, which may be configured as a sieve or a fluid permeable membrane. Thus, the adsorbent materials 42, 52 may be fixed in their positions.

Using different filtration cartridges 40, 50 in filter modules 20, 30 as well as using different combinations of adsorbent materials 42, 52 may be effective for filter exhaust fluids of fuel cell systems, particularly after a water separator 10, because a reaction time of the fluid with the adsorbent material 42, 52 may be different. For example, a reaction time with the ion exchange resin may be shorter than a reaction time with the activated carbon.

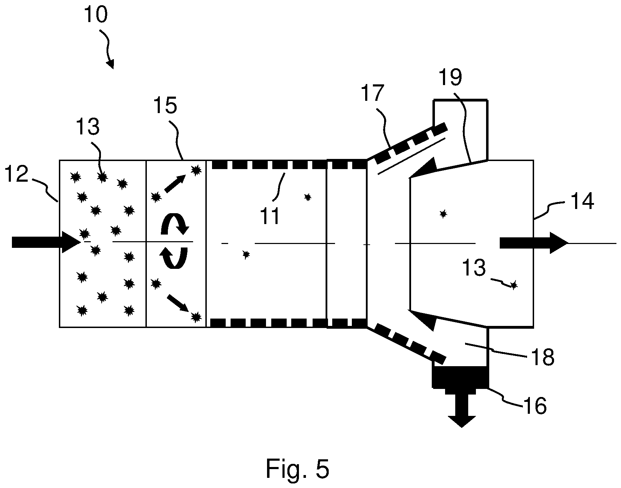

In Figure 5 functioning of the water separator 10 of the filtration system 100 according to Figure 1 is depicted.

The fluid flow, exhaust fluid of the fuel cell system with a high content of water droplets 13, enters the water separator 10 via the inlet port 12. In a swirl generator stage 15 the heavier water droplets 13 are forced to the outer wall of the water separator 10 by the centrifugal force thus forming a water film 11 on the tube wall. In an exterior diffusor 17 the water is separated in a water drain zone 18 being guided to the water drain port 16 of the water separator 10. An internal diffusor 19 separates the fluid flow being guided to the outlet port 14. The fluid flow at the outlet port only comprises a low content of water droplets 13.

### Reference Numbers

- 10: water separator
- 11: water film
- 12: inlet port
- 13: water droplet
- 14: outlet port
- 15: swirl generator
- 16: water drain port
- 17: exterior diffusor
- 18: water drain zone
- 19: internal diffusor
- 20: filter module
- 22: housing
- 23: first housing part
- 24: inlet port
- 26: outlet port
- 28: second housing part
- 30: filter module
- 32: housing
- 33: first housing part
- 34: inlet port
- 36: outlet port
- 38: second housing part
- 40: filtration cartridge
- 42: adsorbent material
- 44: inflow opening
- 46: outflow opening
- 48: cartridge container
- 49: fluid permeable interface
- 50: filtration cartridge
- 52: adsorbent material
- 54: inflow opening
- 56: outflow opening
- 58: cartridge container
- 59: fluid permeable interface
- 100: filtration system

## Claims

1. A filtration system (100) for filtering fluids, in particular for filtering exhaust fluids of a fuel cell system, the filtration system (100) comprising:
a water separator (10) for separating water from a fluid flow, the water separator (10) comprising an inlet port (12) for the fluid flow having a first water content entering the water separator (10), an outlet port (14) for the fluid flow having a second water content leaving the water separator (10), and a water drain port (16) for the water separated from the fluid flow, the first water content being higher than the second water content; and
a first filter module (20) and a second filter module (30), each of the first and second filter modules (20, 30) comprising a first adsorbent material (42) and/or a second adsorbent material (52),
wherein an inlet port (24) of the first filter module (20) is connected to the outlet port (14) of the water separator (10),
an inlet port (34) of the second filter module (30) is connected to the water drain port (16) of the water separator (10),
the first filter module (20) comprises an outlet port (26) for a filtered fluid,
the second filter module (30) comprises an outlet port (36) for filtered water, and
the first and second adsorbent materials (42, 52) are for removing at least perfluoroalkyl and polyfluoroalkyl substances from the fluid flow and/or the water.

2. The filtration system (100) according to claim 1, wherein the first and second filter modules (20, 30) respectively comprise filtration cartridges (40, 50) arranged inside the first and second filter modules (20, 30) such that the inlet ports (24, 34) of the first and second filter modules (20, 30) are separated from the outlet ports (26, 36) of the first and second filter modules (20, 30) by the filtration cartridges (40, 50).

3. The filtration system (100) according to claim 2, wherein the first and second filter modules (20, 30) respectively comprise housings (22, 32), in which the filtration cartridges (40, 50) are respectively arranged, each of the housings (22, 32) comprising a first housing part (23, 33) and a second housing part (28, 38).

4. The filtration system (100) according to claim 2 or 3, wherein the filtration cartridges (40, 50) are replaceable.

5. The filtration system (100) according to any one of preceding claims, wherein each of the first and second adsorbent materials (42, 52) is any one or any combination of an ion exchanger resin, an activated carbon, and a mixture of an ion exchanger resin and an activated carbon.

6. A filtration cartridge (40, 50) for a filtration system (100) for filtering fluids, in particular for filtering exhaust fluids of a fuel cell system, the filtration cartridge (40, 50) comprising:
a cartridge container (48, 58) comprising a first adsorbent material (42) and/or a second adsorbent material (52) for removing at least perfluoroalkyl and polyfluoroalkyl substances from the fluids,
wherein the cartridge container (48, 58) further comprises at least one inflow opening (44, 54) and at least one outflow opening (46, 56), the first and/or second adsorbent materials (42, 52) being arranged inside the cartridge container (48, 58) between the at least one inflow opening (44, 54) and the at least one outflow opening (46, 56).

7. The filtration cartridge (40, 50) according to claim 6, wherein the cartridge container (48, 58) further comprises at least one fluid permeable interface (49, 59) enclosing the first and/or second adsorbent materials (42, 52), the least one fluid permeable interface (49, 59) being a sieve or a fluid permeable membrane.

8. The filtration cartridge (40, 50) according to claim 6 or 7, wherein one of the first and/or second adsorbent materials (42, 52) is arranged in the cartridge container (48, 58) upstream of another of the first and/or second adsorbent materials (42, 52).

9. The filtration cartridge (40, 50) according to any one of claims 6 to 8, wherein each of the first and second adsorbent materials (42, 52) is any one or any combination of an ion exchanger resin, an activated carbon, and a mixture of an ion exchanger resin and an activated carbon.

10. The filtration cartridge (40, 50) according to any one of claims 6 to 9, wherein the filtration cartridge (40, 50) is replaceable.
